# DEMANDE DE BREVET EUROPEEN

(11) **EP 2 138 261 A1**
(43) Date de publication de la demande: **30.12.2009**
(21) Numéro de dépôt: 09305495.5
(22) Date de dépôt: 29.05.2009
(51) Int. Cl.: B23K 11/14, B23K 11/16

(54) **Soudage de cabochons métalliques sur une paroi métallique ayant un revêtement non conducteur de l'électricité**

(30) Priorité: 27.06.2008 FR 0854364
(71) Demandeur: SABATIER S.A.S., 13127 VITROLLES (FR)
(72) Inventeur: Malinie, Robert, 13320 Bouc Bel Air (FR)
(74) Mandataire: Derambure, Christian

(57) **Abrégé**

On dispose de cabochons métalliques (C) pourvus de saillies pointues (S), de parois métalliques (P) ayant un revêtement non conducteur de l'électricité et de moyens de soudage (8) à électrode (7) et contre électrode (8), on positionne un cabochon (C) au regard de la paroi (P), on applique l'électrode (7) et la contre-électrode (8) sur le cabochon et la paroi selon une première direction, de manière que les saillies (S) s'enfoncent dans le revêtement (R), on soude le cabochon sur la paroi. On choisit un cabochon ayant une face périphérique sur le bord libre de laquelle sont ménagées les saillies et, une fois avoir appliquées l'électrode et la contre-électrode selon la première direction et tout en appliquant sur le cabochon et la paroi des forces antagonistes suffisantes, selon la première direction, on assure un déplacement relatif du cabochon par rapport à la paroi, sur une faible course, dans une seconde direction, de manière que les saillies grattent la paroi et que la continuité électrique soit assurée entre eux, sans déformation du cabochon.

## Description

L'invention est relative au soudage de cabochons métalliques sur une paroi métallique ayant un revêtement non conducteur de l'électricité. Elle vise d'abord un procédé de soudage de cabochons métalliques du type pourvu de saillies périphériques pointues, sur une face frontale d'une paroi métallique ayant un revêtement non conducteur de l'électricité. Elle vise également un procédé de soudage de tels cabochons sur un conteneur ayant une telle paroi.

Un tel conteneur est un bidon métallique pourvu de deux attaches support, dénommés cabochons, diamétralement opposés sur sa face extérieure, destinés à être associés et à porter les deux parties extrêmes d'une anse. Un tel bidon, également pourvu d'un couvercle, est destiné au conditionnement d'un contenu solide, liquide ou pâteux, tel que des produits industriels, chimiques, des peintures, des adjuvants...

L'invention vise également un procédé de mise en place d'une telle anse sur un tel conteneur. Elle vise ensuite un dispositif de soudage de tels cabochons spécialement destiné à la mise en oeuvre dudit procédé de soudage de cabochons sur une telle paroi. Elle vise également un dispositif de soudage de tels cabochons sur un tel conteneur, spécialement destiné à la mise en oeuvre dudit procédé de soudage de tels cabochons sur un tel conteneur. Elle vise enfin un dispositif de mise en place d'une telle anse sur un tel conteneur, spécialement destiné à la mise en oeuvre dudit procédé correspondant.

Le document US-A-3233072 décrit un procédé de soudage de cabochons métalliques sur une face frontale d'une paroi métallique d'un conteneur et comportant en outre une face arrière, dans lequel : on dispose de dits cabochons et de dits conteneurs ; on dispose de moyens de soudage à électrode et contre électrode et des moyens associés d'alimentation électrique ; dans une première étape, on positionne un cabochon au regard et à proximité immédiate de sa position finale sur la face frontale de la paroi ; dans une deuxième étape, on déplace en rapprochant et on applique l'électrode et la contre-électrode sur le cabochon et la face arrière de la paroi avec des forces antagonistes de pression selon une première direction sensiblement orthogonale à la paroi ; dans une troisième étape, on soude le cabochon sur la face frontale de la paroi grâce aux moyens de soudage à électrode et contre électrode alimentés électriquement à cette fin ; et dans une quatrième étape, on déplace en écartant et dégage l'électrode et la contre électrode du cabochon et de la paroi, jusqu'à permettre de dégager la paroi sur laquelle est alors fixé le cabochon.

Un dispositif de soudage de cabochons spécialement destiné à la mise en oeuvre de ce procédé comprend : des moyens d'amenée de conteneurs dépourvus de cabochons ; des moyens de support de conteneurs dépourvus de cabochons ; des moyens d'amenée de cabochons ; des moyens de support de cabochons ; des moyens de support de conteneurs pourvus de cabochons soudés sur la face frontale de leur paroi ; des moyens d'évacuation de conteneurs pourvus de cabochons soudés sur la face frontale de leur paroi ; des moyens de positionnement d'un cabochon porté par les moyens de support de cabochons au regard et à proximité immédiate de sa position finale sur la face frontale de la paroi d'un conteneur porté par les moyens d'amenée et de support de conteneurs ; des moyens de soudage incluant une électrode et une contre électrode en regard, des moyens de support de l'électrode et de la contre électrode respectivement, des moyens associés d'alimentation électrique ; des moyens de déplacement relatif des moyens de support de l'électrode et de la contre électrode pour rapprocher ou écarter mutuellement l'électrode et la contre-électrode ; et des moyens aptes à appliquer à l'électrode et à la contre-électrode, des forces antagonistes de pression selon une première direction sensiblement orthogonale à la paroi placée entre elles.

Si la paroi métallique comporte un revêtement non conducteur de l'électricité tel que par exemple une peinture, une laque, ou une couche protectrice et/ou décorative sur la face extérieure du conteneur, il n'est pas possible de procéder à un soudage à travers ce revêtement. C'est pourquoi, le document US-A-3233072 prévoit que le cabochon est pourvu de saillies pointues et que, dans la deuxième étape du procédé, on applique l'électrode et la contre-électrode sur le cabochon et la face arrière de la paroi avec des forces antagonistes de pression selon une première direction sensiblement orthogonale à la paroi, de manière que les saillies pointues s'enfoncent dans le revêtement.

Le document US-A-2845522 décrit un procédé et un dispositif analogues aux précédents. Dans ce cas, le cabochon métallique comporte deux flancs évasés formant deux oreilles, sur les faces internes desquelles sont pourvues deux saillies pointues. Dans la deuxième étape du procédé, on applique l'électrode et la contre-électrode sur le cabochon et la face arrière de la paroi avec des forces antagonistes de pression selon une première direction sensiblement orthogonale à la paroi qui sont suffisantes non seulement pour que les saillies pointues s'enfoncent dans le revêtement, mais également pour qu'elles soient déformées vers l'extérieur du cabochon et ainsi gratter la face frontale de la paroi exposée aux saillies. Cela nécessite un cabochon ayant deux flancs évasés portant des saillies inclinées vers l'extérieur du cabochon, qui soit déformable, ce qui est peu compatible avec les exigences de tenue souhaitées, le cabochon ayant une fonction de support.

Le document US-A-3476289 décrit un procédé analogue avec les mêmes inconvénients.

Le document US-A-3340379 concerne un procédé de soudage d'un cabochon recouvert d'un revêtement ayant une base de laquelle saille une saillie d'enlèvement de revêtement. Cette saillie est destinée à percer le revêtement de peinture d'un panneau métallique et à venir au contact du métal de ce panneau. Une fois la peinture percée, on applique une pression au moyen d'un pistolet de soudage et on réalise le soudage, un arc électrique étant formé entre le panneau et le cabochon. On retire le cabochon tout en maintenant l'arc électrique, ce qui conduit à réaliser une flaque de métal fondu. Puis, le cabochon est pressé contre le panneau dans sa position finale pour obtenir le soudage. Le cabochon peut comporter quatre saillies à 90°. Lorsque l'on applique une pression au moyen d'un pistolet de soudage, et par suite d'un mouvement de rotation ou autre, le pistolet perce et gratte le revêtement de peinture, pour former sur le panneau un anneau électriquement conducteur, qui supporte l'arc électrique. Puis, le cabochon est retiré puis ramené en position finale.

II existe des cabochons métalliques dans lesquels les saillies pointues ne sont pas inclinées vers l'extérieur du cabochon, comme il a été décrit plus haut. Ainsi, le document US-A-3476905 vise le cas d'un cabochon métallique ayant une face périphérique cylindrique ou pseudo-cylindrique sur le bord libre de laquelle sont ménagées les saillies pointues. Ce document décrit un procédé et un dispositif de soudage de cabochons de ce type. Dans ce cas, l'application de l'électrode et de la contre-électrode sur le cabochon et la face arrière de la paroi avec des forces antagonistes de pression selon une première direction sensiblement orthogonale à la paroi ne permet pas la déformation des saillies pointues, ce qui est un inconvénient majeur si la face frontale de la paroi métallique du conteneur comporte un revêtement non conducteur de l'électricité.

L'invention a donc pour but de permettre de réaliser un soudage efficace lorsque d'une part le cabochon métallique est du type ayant une face périphérique cylindrique ou pseudo-cylindrique sur le bord libre de laquelle sont ménagées les saillies pointues et le conteneur est du type ayant une paroi métallique mince dont la face frontale comporte un revêtement non conducteur de l'électricité.

L'invention a tout spécialement pour but d'être adaptée au cas où les revêtements et/ou les saillies sont tels que l'application de l'électrode et de la contre-électrode sur le cabochon et la face arrière de la paroi avec des forces antagonistes de pression selon une première direction sensiblement orthogonale à la paroi, telles que celles couramment employées dans l'état de la technique, ne permet pas ou ne permet pas avec une certitude suffisante et/ou un degré approprié, un contact entre les saillies et la paroi propre à assurer une bonne continuité électrique entre le cabochon métallique et la paroi métallique indispensable au soudage. Une telle situation se présente lorsque, malgré les forces antagonistes de pression appliquées, les saillies ne pénètrent pas dans le revêtement jusqu'à le traverser et atteindre la paroi métallique elle-même. Une telle situation peut résulter d'un revêtement particulièrement dur, ou épais ou de saillies dont les pointes sont émoussées.

L'invention a également pour but d'éviter une déformation substantielle du cabochon.

L'invention a également pour but de ne pas devoir utiliser des cabochons métalliques du type ayant deux flancs évasés formant deux oreilles, sur les faces internes desquelles sont pourvues deux saillies pointues, mais au contraire pouvoir utiliser des cabochons métalliques du type ayant une face périphérique cylindrique ou pseudo-cylindrique sur le bord libre de laquelle sont ménagées deux ou, plus généralement, un plus grand nombre de saillies pointues. Ceux-ci ont l'avantage d'être plus esthétiques et de comporter davantage de saillies que ceux-là.

L'invention a également pour but de n'obliger qu'au minimum de modifications des procédé et dispositif existants, lesdits dispositifs pouvant être mis en oeuvre, avec la flexibilité souhaitée, moyennant ledit minimum d'adaptations, notamment sans nécessiter d'augmenter les forces antagonistes de pression selon une première direction sensiblement orthogonale à la paroi, appliquées respectivement sur le cabochon et la face arrière de la paroi.

A cet effet, selon un premier aspect, l'invention vise un procédé de soudage de cabochons métalliques du type pourvu de saillies périphériques pointues, sur une face frontale d'une paroi métallique ayant un revêtement non conducteur de l'électricité comportant en outre une face arrière accessible, dans lequel :
- on dispose de dits cabochons et de dites parois,
- on dispose de moyens de soudage à électrode et contre électrode avec une alimentation électrique associée,
- d'abord, on positionne un cabochon porté par des moyens de support de cabochon au regard et au voisinage de sa position finale sur la face frontale de la paroi des moyens de support de paroi,
- on déplace en rapprochant, et on applique, l'électrode et la contre-électrode sur le cabochon et la face arrière de la paroi avec des forces antagonistes de pression selon une première direction sensiblement orthogonale à la paroi, de manière que les saillies pointues du cabochon s'enfoncent dans le revêtement et grattent la paroi,
- on soude alors le cabochon sur la face frontale de la paroi grâce aux moyens de soudage,
- puis, on déplace en écartant, et on dégage, l'électrode et la contre électrode du cabochon et de la paroi sur laquelle est soudée le cabochon, jusqu'à permettre de les dégager,
caractérisé par le fait que:
- on choisit un cabochon ayant une partie latérale périphérique de forme générale cylindrique ou pseudo-cylindrique dont le bord libre comporte des saillies pointues, formées par des découpes, des déformations, des surépaisseurs du bord libre,
- une fois avoir appliqué l'électrode et la contre-électrode sur le cabochon et la face arrière de la paroi selon la première direction de manière que les saillies s'enfoncent dans le revêtement, et tout en appliquant sur le cabochon et la face arrière de la paroi des forces antagonistes de pression suffisantes, selon la première direction, on assure un déplacement relatif du cabochon - dans son ensemble - par rapport à la paroi, sur une faible course, ledit déplacement étant dans une seconde direction sensiblement parallèle à la face frontale de la paroi et sensiblement orthogonale à la première direction, de manière que les saillies pointues grattent la face frontale de la paroi qui leur est exposée et que la continuité électrique soit ainsi assurée entre le cabochon métallique et la paroi métallique, sans déformation substantielle du cabochon,
- et, dans cette situation, on soude le cabochon sur la face frontale de la paroi métallique, en commandant les moyens d'alimentation électrique des moyens de soudage.

Selon une réalisation de ce procédé, on assure le déplacement relatif du cabochon par rapport à la paroi selon la seconde direction, tout en appliquant sur le cabochon et la face arrière de la paroi des forces antagonistes de pression qui sont identiques ou sensiblement identiques de celles que l'on applique pour que les saillies pointues du cabochon s'enfoncent dans le revêtement.

Selon une réalisation, on assure le déplacement relatif du cabochon par rapport à la paroi sur une course au moins égale à celle permettant aux saillies pointues du cabochon de cesser d'être appliqué sur le revêtement afin d'être au contact de la paroi métallique et assurer une continuité électrique, respectivement sur une course sensiblement égale à celle qui permet juste aux saillies pointues du cabochon de cesser d'être appliquées sur le revêtement afin d'être au contact de la paroi métallique et d'assurer une continuité électrique.

Selon une réalisation, pour assurer le déplacement relatif du cabochon par rapport à la paroi, sur la faible course, dans la seconde direction, on procède à un mouvement de coulissement transversal, sur une petite course, des moyens de support de l'électrode et de la contre électrode respectivement et/ou à un mouvement de coulissement axial, sur une faible course, des moyens de support de paroi destinée à recevoir les cabochons.

Selon une réalisation, le procédé de soudage est caractérisé par :
- une étape initiale dans laquelle, alors que l'électrode et la contre-électrode sont écartées l'une de l'autre, on assure un déplacement relatif sur une course substantielle des moyens de support de paroi et des moyens de soudage - dans leur ensemble - dans la seconde direction, de manière à amener l'électrode et la contre-électrode d'un état où elles sont écartées de la paroi à un état où elles sont placées de part et d'autre de la paroi, et
- une étape finale dans laquelle, alors que l'électrode et la contre-électrode sont écartées l'une de l'autre, on assure un déplacement relatif sur une course substantielle des moyens de support de paroi et des moyens de soudage - dans leur ensemble - dans la seconde direction, de manière à amener l'électrode et la contre-électrode d'un état où elles sont placées de part et d'autre de la paroi à un état où elles sont écartées de la paroi.

Selon une réalisation, on procède de façon simultanée et analogue au soudage d'une pluralité de cabochons sur une même paroi métallique, au moyen d'une même pluralité d'électrodes et d'une contre-électrode commune.

Selon un deuxième aspect, l'invention vise un procédé de soudage sur un conteneur ayant une ouverture et une paroi métallique cylindrique ou sensiblement cylindrique avec une face frontale extérieure pourvue d'un revêtement non conducteur de l'électricité et une face arrière accessible par l'ouverture, de deux cabochons métalliques du type pourvu de saillies périphériques pointues, lesdits deux cabochons étant soudés de façon sensiblement diamétralement opposée sur la face frontale extérieure de ladite paroi, caractérisé par un procédé de soudage de cabochons tel qu'il vient d'être exposé.

Selon un troisième aspect, l'invention vise un procédé de mise en place sur un conteneur ayant une ouverture et une paroi métallique cylindrique ou sensiblement cylindrique avec une face frontale pourvue d'un revêtement non conducteur de l'électricité et une face arrière accessible par l'ouverture, d'une anse associée et portée à ses deux parties extrêmes par deux cabochons métalliques du type pourvu de saillies périphériques pointues, lesdits cabochons étant soudés de façon diamétralement opposée sur la face frontale extérieure de ladite paroi, caractérisé par un procédé de soudage des cabochons sur un conteneur tel qu'il vient d'être exposé et une étape d'association des deux parties extrêmes de ladite anse aux deux dits cabochons.

Selon un quatrième aspect, l'invention vise un dispositif de soudage de cabochons métalliques du type pourvu de saillies périphériques pointues, sur une face frontale d'une paroi métallique ayant un revêtement non conducteur de l'électricité et comportant en outre une face arrière accessible, ledit dispositif étant spécialement destiné à la mise en oeuvre du procédé de soudage de cabochons sur une paroi tel qu'il a été exposé plus haut, du type comprenant :
- des moyens de positionnement d'un cabochon porté par des moyens de support de cabochon au regard et au voisinage de sa position finale sur la face frontale de la paroi portée par les moyens de support de paroi,
- des moyens de soudage incluant une électrode et une contre-électrode en regard, des moyens de support de l'électrode et de la contre électrode respectivement, et des moyens d'alimentation associés,
- des moyens de déplacement relatif des moyens de support de l'électrode et de la contre électrode pour rapprocher ou écarter mutuellement l'électrode et la contre-électrode selon une première direction,
- des moyens aptes à appliquer à l'électrode et à la contre-électrode des forces antagonistes de pression selon une première direction sensiblement orthogonale à la paroi placée entre elles,
caractérisé par le fait qu'il comporte des moyens de déplacement relatif des moyens de support de l'électrode et de la contre électrode - dans leur ensemble - et des moyens de support de paroi, sur une faible course, selon une seconde direction sensiblement orthogonale à la première direction et sensiblement parallèle à la face frontale de la paroi, lesdits moyens de déplacement relatif sur une faible course étant opératoires alors que sont opératoires les moyens aptes à appliquer à l'électrode et à la contre-électrode, des forces antagonistes de pression selon la première direction, lesdits moyens de déplacement relatif sur une faible course étant aptes à ce que les saillies pointues grattent la face frontale de la paroi qui leur est exposée et que la continuité électrique soit ainsi assurée entre le cabochon métallique et la paroi métallique, sans déformation substantielle du cabochon.

Selon une réalisation de ce dispositif, lesdits moyens de déplacement relatif sur une faible course sont opératoires alors que sont opératoires les moyens aptes à appliquer à l'électrode et à la contre-électrode, des forces antagonistes de pression selon la première direction.

Selon une réalisation, lesdits moyens de déplacement relatif selon la seconde direction, assurent un déplacement sur une course qui est faible pour être de l'ordre du ou de quelques millimètres.

Selon une réalisation, lesdits moyens de déplacement relatif selon la seconde direction comprennent des moyens de coulissement transversal, sur une faible course et selon la seconde direction, des moyens de support de l'électrode et de la contre électrode respectivement et/ou des moyens de coulissement, sur une faible course et selon la seconde direction, des moyens de support de paroi.

Selon une réalisation, le dispositif de soudage comporte des moyens de déplacement relatif des moyens de support de l'électrode et de la contre électrode - dans leur ensemble - et des moyens de support de paroi, sur une course substantielle, selon la seconde direction, lesdits moyens de déplacement relatif étant opératoires alors que ne sont pas opératoires les moyens aptes à appliquer à l'électrode et à la contre-électrode des forces antagonistes de pression, l'électrode et la contre-électrode étant ainsi écartées l'une de l'autre, lesdits moyens de déplacement relatif sur une course substantielle étant aptes à amener l'électrode et la contre-électrode soit d'un état où elles sont écartées de la paroi à un état où elles sont placées de part et d'autre de la paroi, soit d'un état où elles sont placées de part et d'autre de la paroi à un état où elles sont écartées de la paroi.

Selon une réalisation, les moyens de déplacement relatif sur une course substantielle sont structurellement communs avec les moyens de déplacement relatif sur une faible course, se différenciant par la longueur de la course de déplacement et le moment du déplacement dans le cycle de fonctionnement du dispositif.

Selon une réalisation, le dispositif comporte une pluralité d'électrodes et une contre-électrode commune, sur les mêmes dits moyens de support respectivement, pour le soudage d'une même pluralité de cabochons de façon simultanée et analogue.

Selon un cinquième aspect, l'invention vise un dispositif de soudage sur un conteneur ayant une ouverture et une paroi métallique cylindrique ou sensiblement cylindrique avec une face frontale extérieure pourvue d'un revêtement non conducteur de l'électricité et une face arrière accessible par l'ouverture, de deux cabochons métalliques du type pourvu de saillies périphériques pointues, lesdits deux cabochons étant soudés de façon sensiblement diamétralement opposée sur la face frontale extérieure de ladite paroi, ledit dispositif étant spécialement destiné à la mise en oeuvre du procédé de soudage tel qu'il a été exposé plus haut, caractérisé par le fait que le dispositif de soudage est le dispositif qui vient d'être décrit, les moyens de support de paroi étant des moyens de support de conteneur.

Enfin, selon un sixième aspect, l'invention vise un dispositif de mise en place sur un conteneur ayant une ouverture et une paroi métallique cylindrique ou sensiblement cylindrique avec une face frontale pourvue d'un revêtement non conducteur de l'électricité et une face arrière accessible par l'ouverture, d'une anse portée à ses deux parties extrêmes par deux cabochons métalliques du type pourvu de saillies périphériques pointues, lesdits cabochons étant soudés de façon diamétralement opposée sur la face frontale extérieure de ladite paroi, ledit dispositif étant spécialement destiné à la mise en oeuvre du procédé de soudage tel qu'il a été exposé plus haut, caractérisé par le fait que le dispositif de soudage de deux cabochons diamétralement opposés sur le conteneur est le dispositif qui vient d'être décrit et par le fait qu'il comporte des moyens d'association des deux parties extrêmes de ladite anse aux deux dits cabochons.

Bien entendu, l'invention vise également les produits obtenus directement par les procédés précédemment mentionnés.

Ces différents aspects de l'invention sont liés entre eux car ils découlent tous du soudage de cabochons métalliques du type pourvu de saillies périphériques pointues, sur une face frontale d'une paroi métallique ayant un revêtement non conducteur de l'électricité comportant en outre une face arrière accessible.

On décrit maintenant plusieurs modes de réalisation de l'invention à l'aide des dessins dans lesquels :

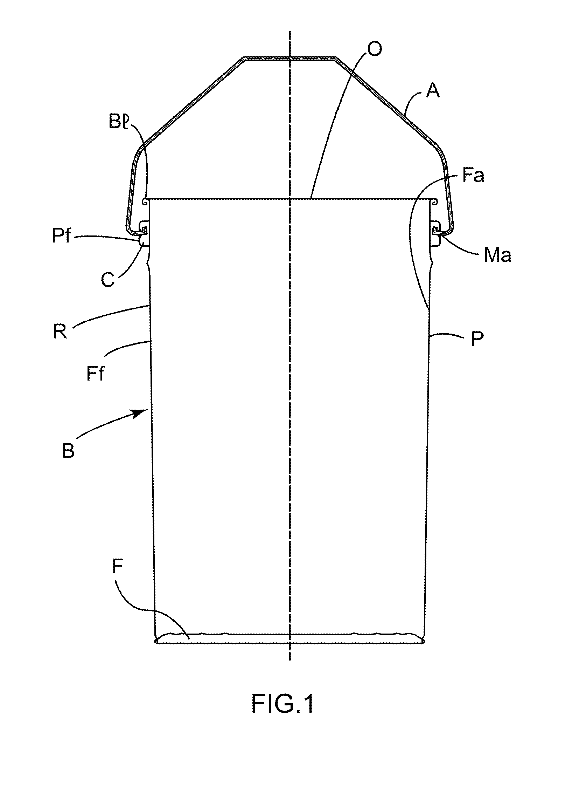

- La figure 1 est une vue en élévation d'un bidon métallique ayant deux cabochons diamétralement opposée situés sur sa face frontale extérieure cylindrique, à proximité de son ouverture, recevant les deux parties extrêmes d'une anse A.

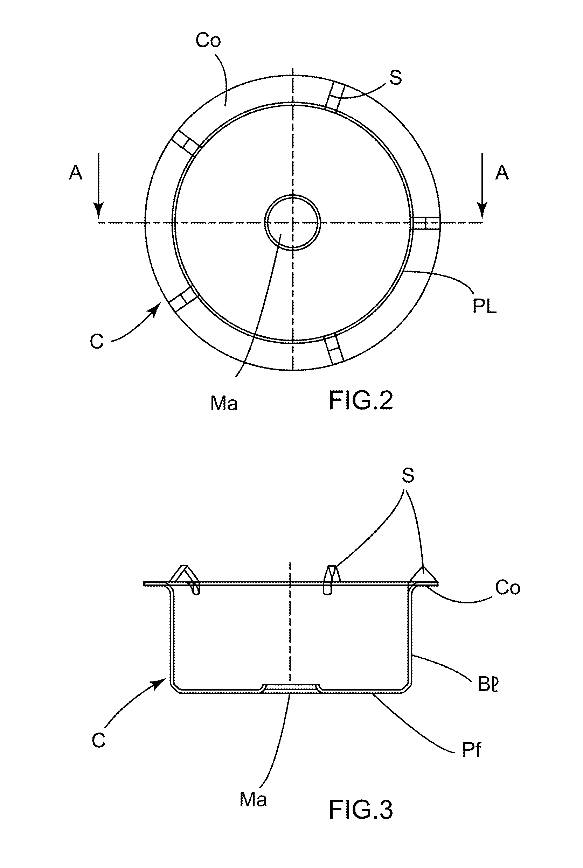

- La figure 2 est une vue en élévation arrière d'un cabochon du type de celui mis en oeuvre.
- La figure 3 est une vue en coupe selon la ligne A-A de la figure 2 du cabochon montrant les saillies dont il est pourvu.

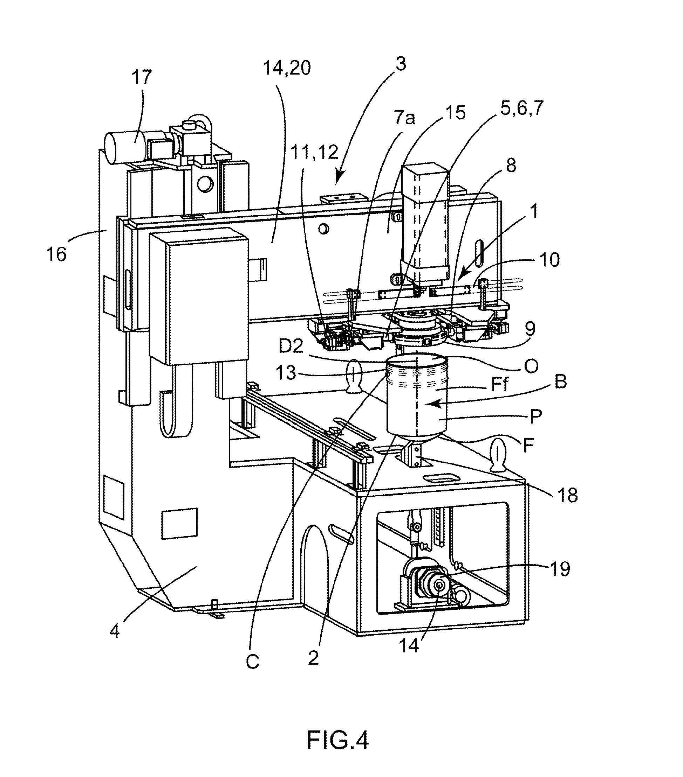

- La figure 4 est une vue en perspective d'une machine de pose de cabochons, incluant un dispositif de soudage de cabochons.

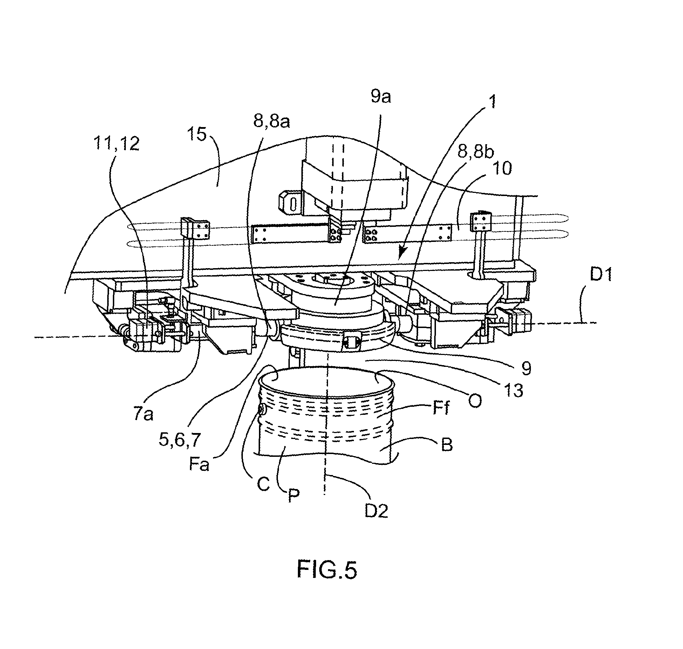

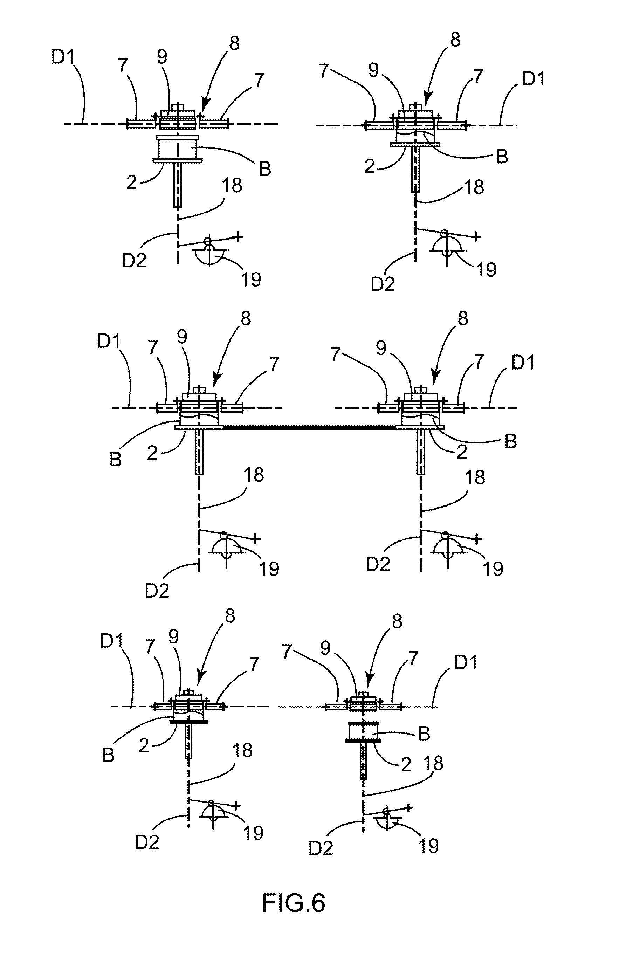

- La figure 5 est une vue en perspective dudit dispositif de soudage.
- La figue 6 est un schéma illustrant le procédé selon l'invention.

L'invention est décrite en référence au cas d'un conteneur B tel qu'un bidon métallique pourvu de deux pièces formant attaches support, dénommées habituellement « cabochons » C, disposés sur le bidon B de façon sensiblement diamétralement opposée et situés sur sa face frontale extérieure Ff, cylindrique ou sensiblement cylindrique.

Un tel bidon B est destiné au conditionnement d'un contenu solide, liquide ou pâteux, tel que des produits industriels, chimiques, des peintures, des adjuvants... Dans une réalisation, ce bidon peut avoir une contenance allant de 2 litres à 40 litres. Dans une réalisation, son diamètre peut aller de environ 150 mm à environ 350 cm.

Les cabochons C sont destinés à être associés et à porter les deux parties extrêmes d'une anse A.

Un tel conteneur B comporte une paroi métallique P cylindrique ou sensiblement cylindrique sur laquelle sont fixés les cabochons C, par soudage. Cette paroi P, en tant que telle, est donc conductrice de l'électricité. Elle est relativement mince.

Un tel conteneur B comporte également un fond F.

Un tel conteneur B comporte une ouverture O opposée au fond F et limitée par le bord libre BI de sa paroi cylindrique ou sensiblement cylindrique P.

Un tel conteneur B est également pourvu d'un couvercle amovible (non représenté).

La paroi métallique P comporte une face frontale extérieure Ff qui, en l'espèce est pourvue d'un revêtement non conducteur de l'électricité R, du côté duquel se trouvent les cabochons C.

Le revêtement non conducteur de l'électricité R est par exemple une peinture, une laque, ou une couche protectrice et/ou décorative déposée sur la face extérieure Ff du conteneur.

Le cabochon C est en métal. II est donc lui-aussi conducteur de l'électricité.

Le cabochon C comporte une partie frontale Pf ayant un moyen d'association Ma avec l'une des deux parties extrêmes de l'anse A. Ce moyen d'association est par exemple un logement ou un trou avec lequel coopère uns saillie ou un bourrelet terminal de l'anse A.

Ce cabochon C est choisi de manière à comporter également une partie latérale périphérique PI de forme générale cylindrique, aplatie, attenante à la partie frontale. Sur son bord libre opposé à la partie frontale, éventuellement plié pour former une collerette périphérique annulaire transversale Co, ce cabochon C comporte des saillies périphériques pointues S formées par des découpes, des déformations, des surépaisseurs correspondantes de ce bord libre ou de toute autre manière analogue. Un tel cabochon C est rigide et substantiellement indéformables dans les conditions normales d'utilisation.

Selon les réalisations, et pour des cabochons C dont le diamètre est compris entre 20 mm et 40mm, le nombre de saillies S est compris, typiquement, entre quatre et six.

Le procédé de soudage de fixation d'un cabochon C sur la face frontale extérieure Ff de la paroi métallique P repose sur la mise en oeuvre d'un ensemble que l'on peut dénommer « dispositif de soudage » 1 et qui comprend, de façon connue de l'état de la technique, d'abord des moyens de support de conteneur B, tels qu'une table 2 sur laquelle on amène un conteneur B qui y repose par son fond F afin d'y souder deux cabochons C.

Bien entendu, une machine complète 3 inclut un bâti 4, des moyens d'amenée et des moyens d'évacuation de conteneurs B, respectivement dépourvus de cabochons C et pourvus de cabochons C.

Le dispositif de soudage 1 comprend également des moyens 5 de support de cabochon C, associés fonctionnellement à des moyens d'amenée de cabochons C.

Le dispositif de soudage 1 comprend également des moyens 6 de positionnement d'un cabochon C portés par les moyens 5 de support de cabochon C au regard et au voisinage de sa position finale sur la face frontale Ff de la paroi P portée par la table 2.

Le cas échéant, les moyens 6 de positionnement d'un cabochon C et les moyens 5 de support de cabochon C sont intégrés dans une électrode 7 sur laquelle on reviendra par la suite.

Dans une réalisation, en effet, l'électrode 7 comporte des moyens magnétiques agissant sur un cabochon C pour le maintenir et, le cas échéant, un logement pour le positionner. Le cas échéant, ces moyens sont commandés de manière sélective, afin que, selon le moment du procédé, le maintien soit ou non assuré.

Le dispositif de soudage 1 comprend également des moyens 8 de soudage incluant l'électrode 7 dont il a été question plus haut, et une contre-électrode 9. Celles-ci sont coaxiales par rapport à une première direction D1. Elles sont en outre disposées en regard l'une de l'autre. L'électrode 7 est destinée à venir contre le cabochon C du côté de la face extérieure de la partie frontale Pf, ainsi que du côté de la face frontale extérieure Ff de la paroi P du conteneur B, tandis que la contre-électrode 9, est destinée à venir contre la face arrière Fa.

Les moyens 8 de soudage incluent également des moyens 7a de support de l'électrode 7 et des moyens 9a de support de la contre électrode 9.

Les moyens 8 de soudage incluent également des moyens 10 d'alimentation électrique associés à l'ensemble électrode 7, contre-électrode 9.

Les moyens 8 de soudage sont commandés de manière sélective, afin que, selon le moment du procédé, l'électrode 7 et la contre-électrode 9, respectivement les moyens 10 d'alimentation électrique soient rendus actifs.

Le dispositif de soudage 1 comprend également des moyens 11 de déplacement relatif des moyens 7a, 9a de support de l'électrode 7 et de la contre électrode 9 aptes à rapprocher ou, au contraire, à écarter mutuellement l'électrode 7 et la contre-électrode 9 selon la première direction. Ces moyens 11 sont agencés de manière à permettre à l'électrode 7 et à la contre électrode 9 de venir contre les faces Ff et Fa et à s'en dégager.

Les moyens 11 de déplacement relatif sont, eux-aussi, commandés de manière sélective, afin que, selon le moment du procédé, ils assurent le rapprochement ou l'éloignement ou encore le maintien en position relative de l'électrode 7 et de la contre-électrode 9.

On entend par « coaxiales par rapport à une première direction D1 », s'agissant de l'électrode 7 et de la contre-électrode 9, le fait que celles-ci, ou des parties de celles-ci, sont situées le long de la première direction D1, ce qui n'exclut pas, comme en l'espèce, que la contre électrode 9 s'étende également de façon annulaire.

Le dispositif de soudage 1 comprend également des moyens 12 aptes à appliquer à l'électrode 7 et à la contre-électrode 9, respectivement à leurs moyens de support 7a, 9a, des forces antagonistes de pression selon la première direction D1. Ces moyens sont eux-aussi commandés de manière sélective, afin que, selon le moment du procédé, la pression soit appliquée ou au contraire relâchée.

Les moyens 5 de support de cabochon C et les moyens 6 de positionnement d'un cabochon C peuvent être, et en l'espèce sont, intégrés dans l'électrode 7, ou à ses moyens 7a, 9a, de support.

Dans la réalisation représentée, la table 2 est placée en position inférieure, tandis que les moyens 8 de soudage sont placés en position supérieure, un espace 13 étant prévu entre eux dans lequel vient se placer un conteneur B lors du soudage des cabochons C.

Le cas échéant, la machine 3 comprend des moyens d'orientation des conteneurs B et/ou des moyens d'orientation des cabochons C, ainsi que des moyens de réglage de la position finale des cabochons C sur les conteneurs B.

En outre, la machine 3 comprend, de façon classique, des moyens de commande, des moyens de contrôle, etc.

Dans la réalisation représentée, la première direction D1 qui correspond à un axe des moyens 8 de soudage est disposée horizontalement au dessus de la table 2 qui définit un axe D2 parallèle à une seconde direction verticale. Par ailleurs, la première direction D1 se trouve être sensiblement orthogonale à la paroi P du conteneur B lorsqu'un conteneur B est en place sur la table 2 et la paroi P placée entre l'électrode 7 et la contre-électrode 9. Quant à la seconde direction D2, elle est sensiblement orthogonale à la première direction D1 et sensiblement parallèle à la face frontale Ff de la paroi P du conteneur B, lorsque celui-ci se trouve sur la table 2.

Le dispositif de soudage 1 comporte également des moyens 14 de déplacement relatif des moyens 7a, 9a de support de l'électrode 7 et de la contre-électrode 9 - dans leur ensemble - et de la table 2, sur une course substantielle, selon la seconde direction D2.

Selon les réalisations, ces moyens 14 sont associés structurellement et fonctionnellement soit aux moyens 7a, 9a de support de l'électrode 7 et de la contre-électrode 9 soit à la table 2 soit aux deux.

Dans la réalisation représentée, les moyens 14 sont associés structurellement et fonctionnellement aux moyens 7a, 9a de support de l'électrode 7 et de la contre-électrode 9 et à la table 2.

II est en effet prévu une traverse 15 formant un chariot monté de façon coulissante monte et baisse par rapport à une colonne 16 de la machine 3, un moyen 17 moteur assurant le déplacement vers le haut ou le bas selon la première direction D1, respectivement le maintien en position à une certaine hauteur. La traverse 15 supporte le dispositif de soudage 1.

D'autre part, il est prévu que la table 2 soit elle aussi portée par une tige, bielle ou colonne 18, guidée à coulissement monte et baisse par rapport au bâti 4, un moyen 19 moteur assurant le déplacement vers le haut ou le bas selon la première direction D1, respectivement le maintien en position à une certaine hauteur.

Les moyens 14 de déplacement relatif sont, eux-aussi, commandés de manière sélective, afin que, selon le moment du procédé, les moyens 7a, 9a de support de l'électrode 7 et de la contre-électrode 9 et de la table 2 soient placés les uns par rapport aux autres, selon la seconde direction D2, en situation rapprochée ou en situation éloignée ou encore passer de l'une à l'autre de ces situations.

En situation rapprochée, les moyens 7a, 9a de support de l'électrode 7 et de la contre-électrode 9 et la table 2 sont placés les uns par rapport aux autres, selon la seconde direction D2, de manière que l'électrode 7 et la contre-électrode 9 puissent se trouver de part et d'autre de la paroi P vers la localisation finale des cabochons C d'un conteneur B se trouvant sur la table 2.

En situation éloignée, les moyens 7a, 9a de support de l'électrode 7 et de la contre-électrode 9 et la table 2 sont placés les uns par rapport aux autres, selon la seconde direction D2, de manière que l'électrode 7 et la contre-électrode 9 soient dégagées au dessus de la paroi P d'un conteneur B se trouvant sur la table 2.

La course verticale de coulissement entre la situation rapprochée et la situation éloignée est substantielle, puisqu'elle doit permettre de faire passer l'électrode 7 et la contre-électrode 9 d'une situation où elles sont en regard de la paroi P vers la localisation finale des cabochons C à une situation où elles sont totalement dégagées au dessus du conteneur B se trouvant sur la table 2, de manière à pouvoir soit mettre en place un tel conteneur dépourvu de cabochons C sur la table 2 soit enlever de la table 2 un conteneur B pourvu des cabochons C.

Selon une application typique, la course substantielle est de l'ordre de 50 à 200 mm.

Bien entendu, les moyens 14 de déplacement relatif sont commandés de manière sélective de manière que les moyens 14 de déplacement sont opératoires alors que ne sont pas opératoires les moyens 12 aptes à appliquer à l'électrode 7 et à la contre-électrode 9 des forces antagonistes de pression, l'électrode 7 et la contre-électrode 9 étant ainsi écartées l'une de l'autre.

Dans la réalisation représentée, la machine 2 comporte deux moyens 8a, 8b de soudage diamétralement opposés par rapport à l'axe D2 de la table 2. Chacun de ces deux moyens 8a, 8b de soudage est destiné à l'un des deux cabochons C. Ces deux moyens 8a, 8b de soudage sont coaxiaux par rapport à la première direction D1 et disposées en regard l'un de l'autre.

Les deux moyens 8a, 8b de soudage sont identiques et fonctionnent en synchronisme et de façon analogue. Par la suite, on ne décrira par conséquent que l'un des deux.

Les moyens 7a de support de l'électrode 7 et les moyens 9a de support de la contre-électrode 9 comprennent des pièces et organes, dispositifs tels que guides, chariots, etc. aptes à permettre leur déplacement le long de la première direction D1.

Les moyens 11 de déplacement relatif des moyens 7a de support de l'électrode 7 et des moyens de support 9a de la contre-électrode 9 comprennent des organes, dispositifs tels que moteurs, pistons, crémaillères, aptes à assurer le mouvement de rapprochement ou, au contraire, à d'écartement mutuel de l'électrode 7 et de la contre-électrode 9 selon la première direction.

Les moyens 12 aptes à appliquer à l'électrode 7 et à la contre-électrode 9, respectivement à leurs moyens de support 7a, 9a, des forces antagonistes de pression selon la première direction D1 peuvent être plus ou moins intégrés aux moyens 11 de déplacement en question, par exemple se présenter sous forme de vérins ou analogues.

Dans la réalisation représentée, l'électrode 7 se présente sous la forme d'un cylindre allongé par rapport à la direction D1, de diamètre relativement faible, par exemple de l'ordre de 2 à 5 centimètres, apte à venir s'appliquer sur la face extérieure de la partie frontale Pf du cabochon C et seulement sur elle.

La contre-électrode 9 se présente sous la forme générale d'un anneau d'axe D2 formé de tronçons aptes à pouvoir être expansés ou rétractés, de nature à pouvoir venir contre la face arrière Fa de la paroi P sur une partie substantielle de sa périphérie, assurant ainsi une contrepartie efficace à la, respectivement aux, électrode(s) 7.

Le courant électrique assurant le soudage passe de l'électrode 7, au cabochon C, à la paroi P, à la contre-électrode 9. Bien entendu, la table 2 est isolée électriquement.

Dans la réalisation représentée, le dispositif de soudage 1 comporte par conséquent deux électrodes 7 distinctes et une contre-électrode 9 commune, sur les mêmes moyens 9a de support, pour le soudage de deux cabochons C de façon simultanée et analogue. L'invention peut être extrapolée à un plus grand nombre de cabochons C et d'électrodes 7.

II est également entendu qu'une électrode 7 et une contre-électrode 9 assurent les mêmes fonctions de contact électrique et d'application de pression. La contre-électrode 9 peut donc être qualifiée d'électrode, comme l'électrode 7 pourrait être qualifiée de contre-électrode.

Le dispositif de soudage 1 comporte également des moyens 20 de déplacement relatif des moyens 7a, 9a de support de l'électrode 7 et de la contre électrode 9, dans leur ensemble, et de la table 2, sur une faible course, selon la seconde direction D2 dont la fonction sera exposée par la suite.

Ces moyens 20 de déplacement relatif sur une faible course sont opératoires alors que sont opératoires les moyens 12 aptes à appliquer à l'électrode 7 et à la contre-électrode 9, des forces antagonistes de pression selon la première direction D1.

Les moyens 20 de déplacement relatif sur une faible course ont pour fonction et sont agencés afin que les saillies pointues S du cabochon mis en place sur un conteneur B, grattent la face frontale Ff de la paroi P du conteneur B qui leur est exposée.

Ce grattement est réalisé dans des conditions et des modalités telles que la continuité électrique soit assurée entre le cabochon métallique C et la paroi métallique P et que, simultanément, il n'y ait aucune déformation substantielle du cabochon C.

Alors que les moyens 14 assurent un déplacement sur une course substantielle, comme il a été exposé ci-dessus, les moyens 20 assurent un déplacement sur une faible course qui, selon une réalisation typique, la course substantielle est de l'ordre du ou de quelques millimètres, en tout état de cause nettement plus petite que la course des moyens 14.

A l'instar des moyens 14 de déplacement, les moyens 20 sont associés structurellement et fonctionnellement soit aux moyens 7a, 9a de support de l'électrode 7 et de la contre-électrode 9 soit à la table 2 soit aux deux. En outre, ils sont, eux-aussi, commandés de manière sélective, afin que, le déplacement intervienne au moment souhaité du procédé.

Dans la réalisation, considérée, les moyens 20 de déplacement relatif sur une course substantielle sont structurellement communs avec les moyens 14 de déplacement relatif sur une faible course. Pour cette raison, il n'est pas nécessaire de décrire plus avant ces moyens 20.

Les moyens 20 se différencient des moyens 14 par la longueur de la course de déplacement, comme il a été indiqué, et le moment du déplacement dans le cycle de fonctionnement du dispositif de soudage 1 et de la machine 3.

Au dispositif de soudage 1 qui vient d'être décrit dans le cas de deux cabochons C diamétralement opposés, peuvent être associés fonctionnellement, et le cas échéant structurellement, des moyens d'association des deux parties extrêmes d'une anse A aux deux cabochons C.

De tels moyens d'association d'une anse à un cabochon sont connus de l'état de la technique ou à la portée de l'homme du métier.

On dispose ainsi d'un dispositif ou d'une machine ou d'une ligne de mise en place sur les conteneurs B d'anses A.

Le procédé de mise en oeuvre d'un dispositif de soudage 1 tel qu'il vient d'être décrit est le suivant.

Au départ, on dispose de conteneurs B, définissant des parois P, et de cabochons C du type décrit plus haut.

On dispose également du dispositif de soudage 1 tel qu'il a été décrit plus haut.

On peut alors amener un cabochon C sur les moyens 5 de support de cabochon et un conteneur sur la table 2. Pour cette opération, les moyens 14 de déplacement relatif ont été commandés de manière que les moyens 7a, 9a de support de l'électrode 7 et de la contre-électrode 9 et de la table 2 soient placés en situation éloignée.

On peut alors positionner un cabochon C porté par les moyens 5 de support de cabochon au regard et au voisinage de sa position finale sur la face frontale Ff de la paroi P du conteneur porté par la table 2.

Pour ce faire, d'une part, on commande les moyens 11 de déplacement relatif des moyens 7a, 9a de support de l'électrode 7 et de la contre électrode 9 pour écarter mutuellement l'électrode 7 et la contre-électrode 9 selon la première direction D1 d'un espace permettant le passage entre elles de la paroi P.

D'autre part, on commande les moyens 14 de déplacement relatif pour les faire passer de la situation éloignée à la situation rapprochée,

En conséquence, l'électrode 7 et la contre-électrode 9 se trouvent placées de part et d'autre de la paroi P vers la localisation finale des cabochons C.

On peut alors déplacer dans le sens du rapprochement et appliquer l'électrode 7 et la contre-électrode 9 sur la face extérieure de la partie frontale Pf du cabochon C et la face arrière Fa de la paroi P du conteneur B, avec des forces antagonistes de pression selon la première direction D1, dont on rappelle qu'elle est sensiblement orthogonale à la paroi P. On procède également à l'expansion de la contre électrode 9 dont le diamètre avait été rétréci pour permettre l'introduction de la contre-électrode 9 dans le conteneur B par l'ouverture O.

Pour ce faire, on commande les moyens 11 de déplacement relatif des moyens 7a, 9a de support de l'électrode 7 et de la contre électrode 9 pour rapprocher mutuellement l'électrode 7 et la contre-électrode 9 selon la première direction D1 et les moyens 12 aptes à appliquer à l'électrode 7 et à la contre-électrode 9, respectivement à leurs moyens de support 7a, 9a, des forces antagonistes de pression selon la première direction D1.

La pression appliquée est suffisante pour que les saillies pointues S du cabochon C s'enfoncent dans le revêtement R, en l'espèce substantiellement selon la première direction D1.

Dans cette situation, et tout en appliquant sur la face extérieure de la partie frontale Pf du cabochon C et la face arrière Fa de la paroi P du conteneur B des forces antagonistes de pression suffisantes, selon la première direction D1, on assure un déplacement relatif du cabochon C - dans son ensemble - par rapport à la paroi P, sur une faible course et dans la seconde direction D2.

La pression appliquée est suffisante pour que les saillies pointues S du cabochon C grattent la face frontale Ff de la paroi P qui leur est exposée sur une petite course correspondant à la faible course en question.

Pour ce faire, on commande d'une part les moyens 12 aptes à appliquer à l'électrode 7 et à la contre-électrode 9, respectivement à leurs moyens de support 7a, 9a, des forces antagonistes de pression selon la première direction D1, d'autre part les moyens 20 de déplacement relatif sur la faible course.

Comme indiqué précédemment, le grattement est réalisé dans des conditions et des modalités telles que la continuité électrique soit assurée entre le cabochon métallique C et la paroi métallique P et que, simultanément, il n'y ait aucune déformation substantielle du cabochon C.

Dans cette situation, on soude le cabochon C sur la face frontale Ff de la paroi P grâce aux moyens 8 de soudage, et plus spécialement on commande les moyens d'alimentation électrique 10 à cette fin.

Puis, on déplace en écartant, et on dégage, l'électrode 7 et la contre-électrode 9 du cabochon C et de la paroi P sur laquelle est soudée le cabochon C. On procède également à la rétraction de la contre- électrode 9 dont le diamètre avait été augmenté pour venir contre la face arrière Fa de la paroi P, afin de permettre sa sortie ultérieure du conteneur B par l'ouverture O. Pour ce faire, on commande les moyens 12 pour cesser d'appliquer à l'électrode 7 et à la contre-électrode 9, respectivement à leurs moyens de support 7a, 9a, des forces antagonistes de pression selon la première direction D1 et on commande les moyens 11 de déplacement relatif des moyens 7a, 9a de support de l'électrode 7 et de la contre électrode 9 pour éloigner l'électrode 7 de la contre-électrode 9 selon la première direction D1.

On dégage alors le conteneur B ayant les deux cabochons C soudés de l'électrode 7 et de la contre-électrode 9.

Dans une réalisation, on applique sur le cabochon C et la face arrière Fa de la paroi P des forces antagonistes de pression qui sont identiques ou sensiblement identiques de celles que l'on applique pour que les saillies pointues S du cabochon C s'enfoncent dans le revêtement R.

Dans une réalisation, on assure le déplacement relatif du cabochon C par rapport au conteneur B sur une course au moins égale à celle permettant aux saillies pointues S du cabochon C de cesser d'être appliquées sur le revêtement R afin d'être au contact de la paroi métallique P et assurer la continuité électrique. Et, plus précisément, sur une course sensiblement égale à celle qui permet juste aux saillies pointues du cabochon de cesser d'être appliquées sur le revêtement afin d'être au contact de la paroi métallique et d'assurer une continuité électrique. En effet, il n'est nul besoin que la course de déplacement relatif du cabochon C par rapport au conteneur B soit supérieure à ce qui permet la continuité électrique.

L'invention vise également le procédé de mise en place sur le conteneur B d'une anse A comme indiqué plus haut, dans lequel, au procédé de soudage des cabochons comme il vient d'être décrit, on combine une étape d'association des deux parties extrêmes de ladite anse A aux deux dits cabochons C.

## Revendications

1. Procédé de soudage de cabochons métalliques (C) du type pourvu de saillies périphériques pointues (S), sur une face frontale (Ff) d'une paroi métallique (P) cylindrique ou sensiblement cylindrique, ayant un revêtement non conducteur de l'électricité (R) comportant en outre une face arrière (Fa) accessible, dans lequel :
- on dispose de dits cabochons (C) et de dites parois (P),
- on dispose de moyens de soudage (8) à électrode (7) et contre électrode (9) avec une alimentation électrique (10) associée,
- d'abord, on positionne un cabochon (C) porté par des moyens (5) de support de cabochon (C) au regard et au voisinage de sa position finale sur la face frontale (Ff) de la paroi (P) des moyens (2) de support de paroi,
- on déplace en rapprochant, et on applique, l'électrode (7) et la contre-électrode (9) sur le cabochon (C) et la face arrière (Fa) de la paroi (P) avec des forces antagonistes de pression selon une première direction (D1) sensiblement orthogonale à la paroi (P), de manière que les saillies pointues (S) du cabochon (C) s'enfoncent dans le revêtement (R) et grattent la paroi (P),
- on soude alors le cabochon (C) sur la face frontale (Ff) de la paroi (P) grâce aux moyens de soudage (8),
- puis, on déplace en écartant, et on dégage, l'électrode (7) et la contre électrode (9) du cabochon (C) et de la paroi (P) sur laquelle est soudée le cabochon (C), jusqu'à permettre de les dégager,
**caractérisé par le fait que**:
- on choisit un cabochon (C) ayant une partie latérale périphérique (Pl) de forme générale cylindrique ou pseudo-cylindrique dont le bord libre (BI) comporte des saillies pointues (S), formées par des découpes, des déformations, des surépaisseurs du bord libre (Bl),
- une fois avoir appliqué l'électrode (7) et la contre-électrode (9) sur le cabochon (C) et la face arrière de la paroi (P) selon la première direction (D1) de manière que les saillies (S) s'enfoncent dans le revêtement (R), et tout en appliquant sur le cabochon (C) et la face arrière (Fa) de la paroi (P) des forces antagonistes de pression suffisantes, selon la première direction (D1), on assure un déplacement relatif du cabochon (C) - dans son ensemble - par rapport à la paroi (P), sur une faible course, ledit déplacement étant dans une seconde direction (D2) sensiblement parallèle à la face frontale (Ff) de la paroi (P) et sensiblement orthogonale à la première direction (D1), de manière que les saillies pointues (S) grattent la face frontale (Ff) de la paroi (P) qui leur est exposée et que la continuité électrique soit ainsi assurée entre le cabochon métallique (C) et la paroi métallique (P), sans déformation substantielle du cabochon (C)
- et, dans cette situation, on soude le cabochon (C) sur la face frontale (Ff) de la paroi métallique (P), en commandant les moyens d'alimentation électrique (10) des moyens de soudage (8).

2. Procédé de soudage de cabochons (C) selon la revendication 1, **caractérisé par le fait que** l'on assure le déplacement relatif du cabochon (C) par rapport à la paroi (P) selon la seconde direction (D2), tout en appliquant sur le cabochon (C) et la face arrière (Fa) de la paroi (P) des forces antagonistes de pression qui sont identiques ou sensiblement identiques de celles que l'on applique pour que les saillies pointues (S) du cabochon (C) s'enfoncent dans le revêtement (R).

3. Procédé de soudage de cabochons (C) selon l'une quelconque des revendications 1 et 2, **caractérisé par le fait que** l'on assure le déplacement relatif du cabochon (C) par rapport à la paroi (P) sur une course au moins égale à celle permettant aux saillies pointues (S) du cabochon (C) de cesser d'être appliquées sur le revêtement (R) afin d'être au contact de la paroi métallique (P) et assurer une continuité électrique.

4. Procédé de soudage de cabochons (C) selon l'une quelconque des revendications 1 à 3, **caractérisé par le fait que** l'on assure le déplacement relatif du cabochon (C) par rapport à la paroi (P) sur une course sensiblement égale à celle qui permet juste aux saillies pointues (S) du cabochon (C) de cesser d'être appliquées sur le revêtement (R) afin d'être au contact de la paroi métallique (P) et d'assurer une continuité électrique.

5. Procédé de soudage de cabochons (C) selon l'une quelconque des revendications 1 à 4, **caractérisé par le fait que** l'on assure le déplacement relatif du cabochon (C) par rapport à la paroi (P) sur une course de l'ordre du ou de quelques millimètres.

6. Procédé de soudage de cabochons (C) selon l'une quelconque des revendications 1 à 5, **caractérisé par le fait que** pour assurer le déplacement relatif du cabochon (C) par rapport à la paroi (P), sur la faible course, dans la seconde direction (D2), on procède à un mouvement de coulissement transversal, sur une petite course, des moyens (7a, 9a) de support de l'électrode (7) et de la contre-électrode (9) respectivement et/ou à un mouvement de coulissement axial, sur une faible course, des moyens (2) de support de paroi (P) destinée à recevoir les cabochons (C).

7. Procédé de soudage de cabochons (C) selon l'une quelconque des revendications 1 à 6, **caractérisé par** :
- une étape initiale dans laquelle, alors que l'électrode (7) et la contre-électrode (9) sont écartées l'une de l'autre, on assure un déplacement relatif sur une course substantielle des moyens (2) de support de paroi (P) et des moyens de soudage (8) - dans leur ensemble - dans la seconde direction (D2), de manière à amener l'électrode (7) et la contre-électrode (9) d'un état où elles sont écartées de la paroi (P) à un état où elles sont placées de part et d'autre de la paroi (P), et
- une étape finale dans laquelle, alors que l'électrode (7) et la contre-électrode (9) sont écartées l'une de l'autre, on assure un déplacement relatif sur une course substantielle des moyens (2) de support de paroi et des moyens de soudage (8) - dans leur ensemble - dans la seconde direction (D2), de manière à amener l'électrode (7) et la contre-électrode (9) d'un état où elles sont placées de part et d'autre de la paroi (P) à un état où elles sont écartées de la paroi (P).

8. Procédé de soudage de cabochons (C) selon l'une quelconque des revendications 1 à 7, **caractérisé par le fait que** l'on procède de façon simultanée et analogue au soudage d'une pluralité de cabochons (C) sur une même paroi métallique (P), au moyen d'une même pluralité d'électrodes (7) et d'une contre-électrode (9) commune.

9. Procédé de soudage sur un conteneur (B) ayant une ouverture (O) et une paroi métallique (P) cylindrique ou sensiblement cylindrique avec une face frontale extérieure (Ff) pourvue d'un revêtement (R) non conducteur de l'électricité et une face arrière (Fa) accessible par l'ouverture (O), de deux cabochons métalliques (C) du type pourvu de saillies périphériques pointues (S), lesdits deux cabochons (C) étant soudés de façon sensiblement diamétralement opposée sur la face frontale extérieure (Ff) de ladite paroi (P), **caractérisé par** un procédé de soudage de cabochons (C) selon la revendication 8.

10. Procédé de mise en place sur un conteneur (B) ayant une ouverture (O) et une paroi métallique (P) cylindrique ou sensiblement cylindrique avec une face frontale (Ff) pourvue d'un revêtement (R) non conducteur de l'électricité et une face arrière (Fa) accessible par l'ouverture (O), d'une anse (A) associée et portée à ses deux parties extrêmes par deux cabochons métalliques (C) du type pourvu de saillies périphériques pointues (S), lesdits cabochons (C) étant soudés de façon diamétralement opposée sur la face frontale extérieure (Ff) de ladite paroi (P), **caractérisé par** procédé de soudage des cabochons (C) sur un conteneur (B) selon la revendication 9 et une étape d'association des deux parties extrêmes de ladite anse (A) aux deux dits cabochons (C).

11. Dispositif de soudage (1) de cabochons métalliques (C) du type pourvu de saillies périphériques pointues (S), sur une face frontale (Ff) d'une paroi métallique (P) ayant un revêtement (R) non conducteur de l'électricité et comportant en outre une face arrière (Fa) accessible, ledit dispositif (1) étant spécialement destiné à la mise en oeuvre du procédé de soudage selon l'une quelconque des revendications 1 à 8, du type comprenant :
- des moyens (6) de positionnement d'un cabochon (C) porté par des moyens (5) de support de cabochon (C) au regard et au voisinage de sa position finale sur la face frontale (Ff) de la paroi (P) portée par les moyens (2) de support de paroi (P),
- des moyens de soudage (8) incluant une électrode (7) et une contre-électrode (9) en regard, des moyens (7a, 9a) de support de l'électrode (7) et de la contre-électrode (9) respectivement, et des moyens d'alimentation (10) associés,
- des moyens (11) de déplacement relatif des moyens (7a, 9a) de support de l'électrode (7) et de la contre-électrode (9) pour rapprocher ou écarter mutuellement l'électrode (7) et la contre-électrode (9) selon une première direction (D1),
- des moyens (12) aptes à appliquer à l'électrode (7) et à la contre-électrode (9) des forces antagonistes de pression selon une première direction (D1) sensiblement orthogonale à la paroi (P) placée entre elles,
**caractérisé par le fait qu'**il comporte des moyens (11) de déplacement relatif des moyens (7a, 9a) de support de l'électrode (7) et de la contre électrode (9) - dans leur ensemble - et des moyens (2) de support de paroi (P), sur une faible course, selon une seconde direction (D2) sensiblement orthogonale à la première direction (D1) et sensiblement parallèle à la face frontale de la paroi (P), lesdits moyens (11) de déplacement relatif sur une faible course étant opératoires alors que sont opératoires les moyens (12) aptes à appliquer à l'électrode (7) et à la contre-électrode (9), des forces antagonistes de pression selon la première direction (D1), lesdits moyens (11) de déplacement relatif sur une faible course étant aptes à ce que les saillies pointues (S) grattent la face frontale (Ff) de la paroi (P) qui leur est exposée et que la continuité électrique soit ainsi assurée entre le cabochon métallique (C) et la paroi métallique (P), sans déformation substantielle du cabochon (C).

12. Dispositif de soudage (1) de cabochons (C) selon la revendication 11, **caractérisé par le fait que** lesdits moyens (11) de déplacement relatif selon la seconde direction (D2), assurent un déplacement sur une course qui est faible pour être de l'ordre du ou de quelques millimètres.

13. Dispositif de soudage (1) de cabochons (C) selon l'une quelconque des revendications 11 et 12, **caractérisé par le fait que** lesdits moyens (11) de déplacement relatif selon la seconde direction (D2) comprennent des moyens de coulissement transversal, sur une faible course et selon la seconde direction (D2), des moyens (7a, 9a) de support de l'électrode (7) et de la contre-électrode (9) respectivement et/ou des moyens (11) de coulissement, sur une faible course et selon la seconde direction (D2), des moyens (2) de support de paroi (P).

14. Dispositif de soudage (1) de cabochons (C) selon l'une quelconque des revendications 11 à 13, **caractérisé par le fait qu'**il comporte des moyens (11) de déplacement relatif des moyens (7a, 9a) de support de l'électrode (2) et de la contre-électrode (9) - dans leur ensemble - et des moyens (2) de support de paroi (P), sur une course substantielle, selon la seconde direction (D2), lesdits moyens (11) de déplacement relatif étant opératoires alors que ne sont pas opératoires les moyens (12) aptes à appliquer à l'électrode (7) et à la contre-électrode (9) des forces antagonistes de pression, l'électrode (7) et la contre-électrode (9) étant ainsi écartées l'une de l'autre, lesdits moyens (11) de déplacement relatif sur une course substantielle étant aptes à amener l'électrode (7) et la contre-électrode (9) soit d'un état où elles sont écartées de la paroi (P) à un état où elles sont placées de part et d'autre de la paroi (P), soit d'un état où elles sont placées de part et d'autre de la paroi (P) à un état où elles sont écartées de la paroi (P).

15. Dispositif de soudage (1) de cabochons selon la revendication 14, **caractérisé par le fait que** les moyens (11) de déplacement relatif sur une course substantielle sont structurellement communs avec les moyens (11) de déplacement relatif sur une faible course, se différenciant par la longueur de la course de déplacement et le moment du déplacement dans le cycle de fonctionnement du dispositif (1).

16. Dispositif de soudage (1) de cabochons (C) selon l'une quelconque des revendications 11 à 15, **caractérisé par le fait que** qu'il comporte une pluralité d'électrodes (7) et une contre-électrode (9) commune, sur les mêmes dits moyens (7a, 9a) de support respectivement, pour le soudage d'une même pluralité de cabochons (C) de façon simultanée et analogue.

17. Dispositif de soudage (1) sur un conteneur (B) ayant une ouverture (O) et une paroi métallique (P) cylindrique ou sensiblement cylindrique avec une face frontale extérieure (Ff) pourvue d'un revêtement (R) non conducteur de l'électricité et une face arrière (Fa) accessible par l'ouverture (O), de deux cabochons métalliques (C) du type pourvu de saillies périphériques pointues (S), lesdits deux cabochons (C) étant soudés de façon sensiblement diamétralement opposée sur la face frontale extérieure (Ff) de ladite paroi (P), ledit dispositif (1) étant spécialement destiné à la mise en oeuvre du procédé de soudage selon la revendication 9, **caractérisé par le fait que** le dispositif de soudage (1) est le dispositif selon la revendication 16, les moyens (2) de support de paroi (P) étant des moyens (2) de support de conteneur (B).

18. Dispositif de mise en place sur un conteneur (B) ayant une ouverture (O) et une paroi métallique (P) cylindrique ou sensiblement cylindrique avec une face frontale (Ff) pourvue d'un revêtement (R) non conducteur de l'électricité et une face arrière (Fa) accessible par l'ouverture (O), d'une anse (A) portée à ses deux parties extrêmes par deux cabochons métalliques (C) du type pourvu de saillies périphériques pointues (S), lesdits cabochons (C) étant soudés de façon diamétralement opposée sur la face frontale extérieure (Ff) de ladite paroi (P), ledit dispositif étant spécialement destiné à la mise en oeuvre du procédé de soudage selon la revendication 10, **caractérisé par le fait que** le dispositif de soudage (1) de deux cabochons (C) diamétralement opposés sur le conteneur est le dispositif selon la revendication 17 et **par le fait qu'**il comporte des moyens d'association des deux parties extrêmes de ladite anse (A) aux deux dits cabochons (C).
